# EUROPEAN PATENT SPECIFICATION

(11) **EP 0 578 182 B1**
(45) Date of publication and mention of the grant of the patent: **02.05.1997**
(21) Application number: 93110738.7
(22) Date of filing: 05.07.1993
(51) Int. Cl.: B01D 61/56, B01D 35/06, C02F 11/12

(54) **Electro-endosmosis type dehydrator**
Vorrichtung zur Entwässerung durch Elektroosmose
Appareil de déshydratation par électro-osmose

(30) Priority: 07.07.1992 JP 178711/92
(43) Date of publication of application: 12.01.1994
(73) Proprietor: FUJI ELECTRIC CO., LTD., Kawasaki-shi Kanagawa 210 (JP)
(72) Inventor: Yamaguchi, Mikimasa, Kawasaki-ku, Kawasaki-shi, Kanagawa (JP); Kawakami, Hitomi, Kawasaki-ku, Kawasaki-shi, Kanagawa (JP); Matsushita, Hiroshi, Kawasaki-ku, Kawasaki-shi, Kanagawa (JP)
(74) Representative: Grünecker, Kinkeldey, Stockmair & Schwanhäusser Anwaltssozietät

(56) References cited:
- EP-A- 0 046 155
- DE-C- 310 681
- PATENT ABSTRACTS OF JAPAN vol. 14, no. 330 (C-741)16 July 1990 & JP-A-02 119 906 (FUJI ELECTRIC CO LTD) 8 May 1990
- PATENT ABSTRACTS OF JAPAN vol. 9, no. 200 (C-298)16 August 1985 & JP-A-60 068 020 (FUJI DENKI SOUGOU) 18 April 1985
- PATENT ABSTRACTS OF JAPAN vol. 15, no. 202 (C-834)23 May 1991 & JP-A-03 056 107 (FUJI ELECTRIC CO LTD) 11 March 1991

## Description

The present invention relates to an electro-endosmosis type dehydrator for dehydrating the sludge formed, for instance, in a sewage-treatment plant, and more particularly to the structure of an electrode portion in a dehydrator preferred as a belt presser in which a rotary drum is combined with a press belt.

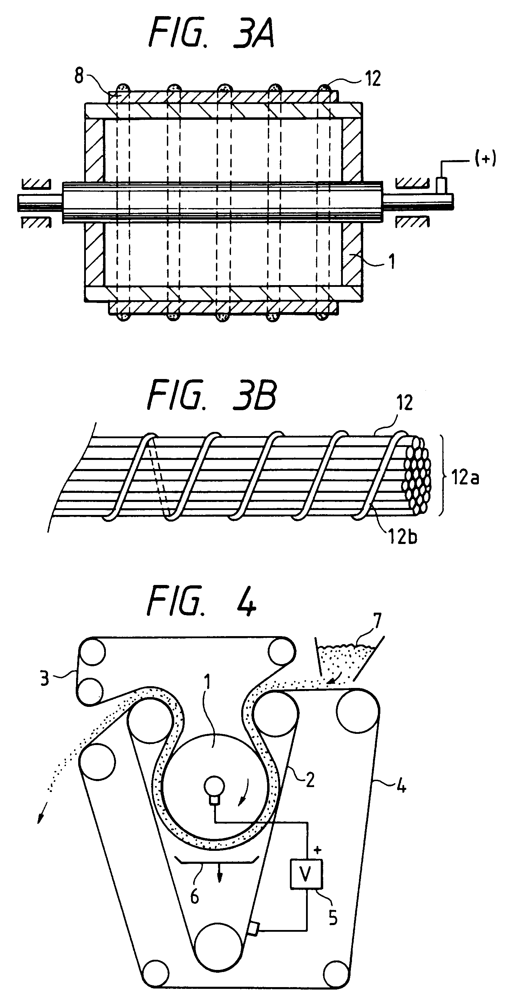

Such an electro-endosmosis dehydrator in which a rotary drum is combined with a press belt has been disclosed, for instance, in Japanese Patent Unexamined Publication No. Sho-56-60604. Fig. 4 shows the configuration of such a rotary drum type and electro-endosmosis type dehydrator. In Fig. 4 the reference numeral 1 represents a rotary drum also functioning as an anode; 2, a water-transmissive press belt also functioning as a cathode and confronted through a sludge passageway with the rotary drum 1; 3 and 4, filtrating cloth belts laid over the dehydrating area surfaces of the rotary drum 1 and the press belt 2; 5, a DC source; and 6, a filtrated water receptacle.

In such a configuration, if a voltage is applied across the rotary drum 1 and the press belt 2, and sludge 7 is supplied to the sludge passageway while the rotary drum 1 is being rotated in the arrow direction, the sludge 7 suffers a mechanical press force, and at the same time the water contained in the sludge is charged into + as the result of an electric field acting therein so that the water flows to the cathode side, passes through the filtrating cloth 4 and the press belt 2, and drops into the filtrated water receptacle 6 so as to be drained out of the system. The dehydrated sludge is recovered as a dehydrated cake. A portion of the water which has been pressed and passed out to the rotary drum side by the mechanical press force is passed through the filtrating cloth 3, and drained out of the system through an drainage groove formed in the drum surface.

The above-mentioned conventional electro-endosmosis type dehydrator is however disadvantageous in the following points: That is, the rotary drum 1 and the press belt 2 also used as electrodes are covered with the filtrating cloths 3 and 4 which are electrically insulating substances. Accordingly, the effective area of the electrodes which are brought into contact with the sludge is decreased (a current flows from the electrodes to the sludge through liquid permeating the texture of the filtrating cloths), so that the conductivity between the sludge 7 and the electrodes is lowered. In this regard, sludge contacting with the electrode includes enough water so that high conductivity is maintained between the electrode and the sludge on the cathode side where water is collected by electro-endosmosis. On the side of the rotary drum 1 acting as an anode, on the contrary, water contained in the sludge is moved to the cathode side with the advance of the electro-endosmosis so that the water containing rate of the sludge contacting with the electrode surface on the anode side decreases so that the specific superficial conductivity is lowered. Hence, it is more and more difficult to flow a current, so that the electro-endosmosis flow quantity, that is, the dehydrating ability is lowered (the electro-endosmosis flow quantity is proportional to a current flowing in the sludge).

To prevent the conductivity between electrodes and sludge from lowering on the anode side, there has been such a trial that the electrode surface of the rotary drum 1 is brought into direct contact with the sludge without using such a filtrating cloth 3. In this case, however, non-conductive gas formed from the electrolysis of water contained in the sludge cannot be removed but it is stored on the surface of the electrode as bubbles (being charged to -), so that these bubbles obstruct electric conduction between the electrode and the sludge.

A dehydrator of the electro-endosmosis type having the features of the first part of claims 1, 2 or 5 is known from JP-A-2 119 906. Other types of electro-endosmotic dehydrators are described in EP-A-00 46 155 and JP-A-60 068 020.

It is the object of the present invention to provide an improved electro-endosmosis type dehydrator having high performance of dehydrating, more particularly the structure of the electrode portion thereof, in which the foregoing problems are solved, high conductivity is ensured between electrodes and sludge, and water contained in the sludge and gas generated in electrolysis can be quickly discharged out of the system.

This object is solved by an electro-endosmosis type dehydrator having the features of claims 1, 2, and 5.

In the respective configurations, the electrodes contact with the sludge directly through no filtering cloth, so that the effective area of the electrodes taking part in the conductivity between the electrodes and sludge is made so large that high conductivity can be ensured.

Further, the water passed out from the sludge by the mechanical press or the like and collected on the electrode surface of the anode, and the gas generated in the electrolysis of water contained in the sludge are quickly discharged outside in a manner as follows. That is, the exuded water and the generated gas are discharged outside through the filtrating material after passing through the dewaterifying/degasifying holes of the electrode plate toward the back side, and on the other hand, the sludge particles going into the dewaterifying/degasifying holes are caught by the filtrating material so as to be prevented from escaping outside. The exuded water and the generated gas are discharged outside, while the filtrating material filled in the dewaterifying/degasifying holes of the electrode plate is preventing sludge particles from escaping out. The band-like filtrating material having a capillary tube function acts as a wick, so that the exuded water collected on the electrode surface, and the generated gas are led outside to be discharged. If the above-mentioned configurations are applied to the cathode as well as the anode, they can act effectively.

In the accompanying drawings:
Fig. 1 is a sectional view of the configuration of a rotary drum type electro-endosmosis type dehydrator possessing the means 1;
Figs. 2A and 2B are diagrams of the configuration of a rotary drum type electro-endosmosis type dehydrator possessing means 2, in which Fig. 2A is a sectional view of a rotary drum portion, and Fig. 2B is a partially expanded diagram of a main portion in Fig. 2A;
Figs. 3A and 3B are diagrams of the configuration of a rotary drum type electro-endosmosis type dehydrator possessing the means 3; in which Fig. 3A is a sectional view of a rotary drum portion, and Fig. 3B is a diagram of the configuration of a wick in Fig. 3A; and
Fig. 4 is a schematic diagram of the whole configuration of a conventional rotary drum type and electro-endosmosis type dehydrator.

Embodiments of the present invention will be described in detail with reference to the drawings. In the drawings of the respective embodiments, parts the same as those in Fig. 4 are referenced correspondingly.

### Embodiment 1:

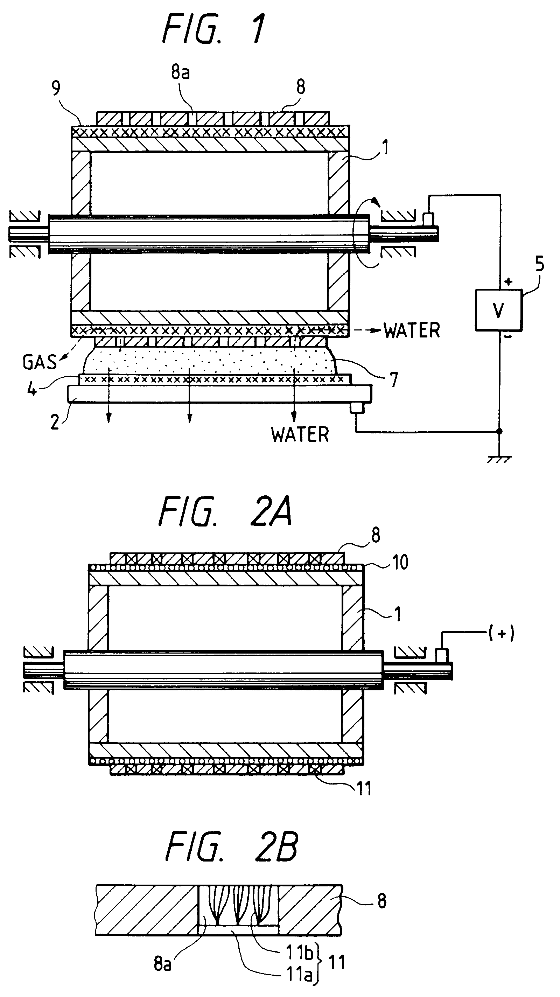

Fig. 1 shows an embodiment of the present invention, in which the cylindrical wall of a rotary drum 1 is coated with an electrode plate (anode) 8 through a filtrating material 9 wider than the electrode plate. Dewaterifying/degasifying holes 8a are scatteringly formed through the plate surface of the electrode plate 8. The dewaterifying/degasifying holes 8a are formed through punching so that they are, for example, circular holes which have a diameter of 3.5 mm and which are arranged at intervals of 30 mm pitch. The filtrating material 9 is, for example, a non-woven cloth being made of polypropylene fiber and having a thickness of about 5 mm. Without using the filtrating cloth 3 shown in Fig. 4, the rotary drum 1 is driven so that the surface of the electrode plate 8 is in direct contact with sludge 7 supplied to a sludge passageway.

In such a configuration, if the sludge 7 is supplied to the sludge passageway between electrodes while a DC voltage is being applied across the anode-side electrode plate 8 covering the rotary drum 1 and a cathode-side press belt 2, water contained in the sludge is moved toward the cathode-side press belt 2 by electro-endosmosis, and discharged out of the system through the filtrating cloth 4. In this case, the anode-side electrode plate 8 is in direct contact with the sludge 7 without any filtrating cloth (insulating substance) laid between the electrode plate 8 and the sludge 7, so that high conductivity is ensured therebetween. As a result of tests carried out by the present inventor for evaluation about this point, it was observed that the ability of electro-endosmosis was improved so much as the conductivity between the electrodes and the sludge was made higher, and it was confirmed that the applied voltage could be reduced from 100 V to 70 V and the power consumption could be reduced so much in order to obtain the ability of electro-endosmosis equivalent to that in the conventional system (in Fig. 4).

On the other hand, the exuded water pressed out toward the electrode plate 8 of the rotary drum 1 from the sludge 7 by the mechanical press force in this dehydrating process, and the gas generated by electrolysis are passed out to the back side of the electrode plate through the dewaterifying/degasifying holes 8a opened through the electrode plate 8, and thereafter quickly discharged outside (to the side of the rotary drum) through the filtrating material 9. Sludge particles and so on put in the dewaterifying/degasifying holes 8a of the electrode plate 8 together with the exuded water are caught by the filtrating material 9 so that they cannot escape outside at all.

### Embodiment 2:

Fig. 2 shows another embodiment of the present invention. This embodiment is an example of application of the above-mentioned Embodiment 1, in which the cylindrical wall of the rotary drum 1 is covered with an electrode plate 8 through a net 10 made of, for example, polypropylene fiber. Each of the dewaterifying/degasifying holes 8a formed through the electrode plate 8 is filled with a filtrating material 11. Nylon fiber planted in a pair of supports 11a as shown in Fig. 2(b) is used as this filtrating material 11.

In such a configuration, the exuded water and the generated gas collected near the surface of the electrode plate 8 in the same manner as in Embodiment 1 are passed out to the back side of the electrode plate through the dewaterifying/degasifying holes 8a, and thereafter quickly discharged outside through the net 10. Sludge particles are caught by the filtrating material 11 so that they cannot escape outside through the dewaterifying/degasifying holes 8a at all.

### Embodiment 3:

Fig. 3 shows yet another embodiment of the present invention, in which a plurality of wicks 12 respectively having a capillary tube function as a band-like filtrating material are scatteringly wound at intervals of suitable pitch on the cylindrical wall of an electrode plate 8 covering the outer cylindrical wall of a rotary drum 1. Each wick 12 is constituted by, for example, a bundle 12a of polypropylene fibers having a thickness of about 0.3 mm, the bundle 12a being bundled with fibers 12b of the same kind, as shown in Fig. 3(b). The wicks 12 are wound and fixed on the electrode plate 8.

In such a configuration, the exuded water and the generated gas collected near the surface of the electrode plate 8 of the rotary drum 1 during electro-endosmosis dehydration are led to the upper side (not contacting with sludge) of the rotary drum through the gaps (capillary tubes) in the fiber bundles of the wicks 12, and discharged into the circumference therefrom. The wicks 12 linearly cover a very small area of the surface of the electrode plate 8, so that the effective area of the electrodes concerning with the conductivity to the sludge hardly suffers influence therefrom, so that it is possible to ensure high conductivity to the sludge.

As was described above, in the electro-endosmosis type hydrator of the present invention, the whole of the surface of any electrode is not covered with filtrating cloth, but is made to be in contact with sludge directly to ensure high conductivity between the electrode and the sludge, and water collected on the electrode, and gas generated therefrom can be quickly discharged out of the system, so that the efficiency of the electro-endosmosis type dehydrator can be improved on a large scale.

## Claims

1. An electro-endosmosis type dehydrator in which a DC voltage source (5) is connected to an anode (8) and a cathode (2) confronted with each other through a space forming a sludge (7) passageway, adapted such that in use, water contained in sludge (7) supplied to said space is collected on the side of said cathode by electro-endosmosis and discharged out of the dehydrator, whereby an electrode plate of at least said anode (8) is in direct contact with said sludge (7) and means at the anode (8) for enabling the discharge of fluids out of the dehydrator are provided,
**characterized in that**
said means comprise dewaterifying/degasifying holes (8a) which are scatteringly formed through said electrode plate and a filtrating material (9) is tightly put on the side of said electrode plate not facing the sludge (7) to cover said
dewaterifying/degasifying holes (8a), and
said filtrating material (9) is a non-woven cloth made of polypropylene and wider than said electrode plate.

2. An electro-endosmosis type dehydrator in which DC voltage source (5) is connected to an anode (8) and a cathode (2) confronted with each other through a space forming a sludge (7) passageway, adapted such that in use, water contained in sludge (7) supplied to said space is collected on the side of said cathode by electro-endosmosis and discharged out of the dehydrator, whereby an electrode plate of at least said anode (8) is in direct contact with said sludge (7) and means at the anode (8) for enabling the discharge of fluids out of the dehydrator are provided,
**characterized in that**
said means comprise dewaterifying/degasifying holes (8a) which are scatteringly formed through said electrode plate, and
each of which is filled with a filtrating material (11).

3. An electro-endosmosis type dehydrator according to claim 2
**characterized in that**
said filtrating material (11) in each said holes includes a support (11a).

4. An electro-endosmosis type dehydrator according to claim 2,
**characterized in that**
the means for enabling the discharge of gases and water is a net (10) on the side of said electrode plate not facing the sludge (7).

5. An electro-endosmosis type dehydrator in which DC voltage source (5) is connected to an anode (8) formed on a rotary drum (1) and a cathode (2) confronted with each other through a space forming a sludge (7) passageway, adapted such that in use, water contained in sludge (7) supplied to said space is collected on the side of said cathode (2) by electro-endosmosis and discharged out of the dehydrator, whereby an electrode plate of at least said anode (8) is in direct contact with said sludge (7) and means at the anode (8) for enabling the discharge of fluids out of the dehydrator are provided,
**characterized in that**
said means comprise band-like filtrating materials (12) which are scatteringly arranged on the surface of said electrode plate of said anode (8) on the side thereof contacting said sludge (7) and which are fixed to said electrode plate, whereby
said band-like filtrating materials (12) have their one-side ends drawn outside and have capillary tube functions.

## Patentansprüche

1. Vorrichtung zur Entwässerung durch Elektro-Endosmose, bei der eine Gleichspannungsquelle (5) mit einer Anode (8) und einer Kathode (2) verbunden ist, die sich über einen Raum gegenüberstehen, der eine Durchgangspassage für Schlamm (7) bildet, derart angepaßt, daß beim Gebrauch Wasser, das in dem Schlamm (7) enthalten ist, der in den Raum gegeben wird, durch Elektro-Endosmose auf der Seite der Kathode gesammelt wird und aus der Vorrichtung zur Entwässerung abgeführt wird, wobei eine Elektrode mindestens der Anode (8) in direktem Kontakt mit dem Schlamm (7) ist, und wobei Mittel an der Anode (8) vorgesehen sind, um das Abführen von Fluiden aus der Vorrichtung zur Entwässerung zu ermöglichen,
**dadurch gekennzeichnet**, daß
diese Mittel Entwässerungs-/Entgasungslöcher (8a) aufweisen, die verteilt durch die Elektrode gebildet sind, und daß ein Filtermaterial (9) fest auf die Seite der Elektrode,
die nicht dem Schlamm (7) gegenüberliegt, gelegt ist, um die Entwässerungs-/Entgasungslöcher (8a) zu bedecken, und
das Filtermaterial (9) ein Vlies ist, daß aus Polypropylen gemacht ist und weiter ist als die Elektrode.

2. Vorrichtung zur Entwässerung durch Elektro-Endosmose, bei welcher eine Gleichspannungsquelle (5) mit einer Anode (8) und einer Kathode (2) verbunden ist, die sich über einen Raum gegenüberstehen, der eine Durchgangspassage für Schlamm (7) bildet, derart angepaßt, daß beim Gebrauch Wasser, das in dem Schlamm (7) enthalten ist, der in den Raum gegeben wird, durch Elektro-Endosmose auf der Seite der Kathode gesammelt wird und aus der Vorrichtung zur Entwässerung abgeführt wird, wobei eine Elektrode von mindestens der Anode (8) in direktem Kontakt mit dem Schlamm (7) ist und Mittel an der Anode (8) vorgesehen sind, um das Abführen von Fluiden aus der Vorrichtung zur Entwässerung zu ermöglichen,
**dadurch gekennzeichnet**, daß
die Mittel Entwässerungs-/Entgasungslöcher (8a) umfassen, die verteilt durch die Elektrode gebildet sind, und jedes davon mit einem Filtermaterial (11) gefüllt ist.

3. Vorrichtung zur Entwässerung durch Elektro-Endosmose nach Anspruch 2,
**dadurch gekennzeichnet**, daß
das Filtermaterial (11) in jedem Loch einen Träger (11a) umfaßt.

4. Vorrichtung zur Entwässerung durch Elektro-Endosmose nach Anspruch 2,
**dadurch gekennzeichnet**, daß
das Mittel zur Ermöglichung des Abführens von Gasen und Wasser ein Netz (10) auf der Seite der Elektrode ist, die nicht dem Schlamm (7) gegenüberliegt.

5. Vorrichtung zur Entwässerung durch Elektro-Endosmose, bei welcher eine Gleichspannungsquelle (5) mit einer Anode (8), die auf einer Rotationstrommel (1) geformt ist, und einer Kathode (2) verbunden ist, die sich über einen Raum gegenüberstehen, der eine Durchgangspassage für Schlamm (7) bildet, derart angepaßt, daß beim Gebrauch Wasser, das in dem Schlamm (7) enthalten ist, der in den Raum gegeben wird, durch Elektro-Endosmose auf der Seite der Kathode (2) gesammelt wird und aus der Vorrichtung zur Entwässerung abgeführt wird, wobei eine Elektrode von mindestens der Anode (1) in direktem Kontakt mit dem Schlamm (7) ist und Mittel an der Anode (8) vorgesehen sind, die das Abführen von Fluiden aus der Vorrichtung zur Entwässerung ermöglichen,
**dadurch gekennzeichnet**, daß
die Mittel bandartige Filtermaterialien (12) umfassen, die - verteilt auf der Oberfläche der Elektrode der Anode (8) - auf der Seite davon, die den Schlamm (7) kontaktiert, angeordnet sind und welche an der Elektrode befestigt sind, wobei die einseitigen Enden der bandartigen Filtermaterialien nach außen gezogen sind und die bandartigen Filtermaterialien Kapillarröhrenfunktion haben.

## Revendications

1. Appareil de déshydratation du type par électro-endosmose dans lequel une source de tension de courant continu (5) est connectée à une anode (8) et à une cathode (2) en regard l'une de l'autre à travers un espace formant un passage de boue (7), adapté pour que lors de l'utilisation, l'eau contenue dans la boue (7) appliquée audit espace soit collectée du côté de ladite cathode par électro-endosmose et déchargée hors de l'appareil de déshydratation, de sorte qu'une plaque d'électrode d'au moins ladite anode (8) est en contact direct avec ladite boue (7) et un moyen sur l'anode (8) pour permettre la décharge des fluides hors de l'appareil de déshydratation sont fournis,
caractérisé en ce que
ledit moyen comprenant des trous d'élimination d'eau/dégazéification (8a) sont formés de façon dispersée à travers lesdites plaques d'électrode et un matériau de filtrage (9) est solidement mis du côté de ladite plaque d'électrode non en regard de la boue (7) pour couvrir lesdits trous d'élimination d'eau/dégazéification (8a), et
ledit matériau de filtrage (9) est une toile non tissée faite de polypropylène et plus large que ladite plaque d'électrode.

2. Appareil de déshydratation du type par électro-endosmose dans lequel une source de tension de courant continu (5) est connectée à une anode (8) et une cathode (2) en regard l'une de l'autre à travers un espace formant un passage de boue (7), adapté pour que lors de l'utilisation, l'eau contenue dans la boue (7) appliquée audit espace soit collectée du côté de ladite cathode par électro-endosmose et déchargée hors de l'appareil de déshydratation, de sorte qu'une plaque d'électrode d'au moins ladite anode (8) est en contact direct avec ladite boue (7) et un moyen sur l'anode (8) pour permettre la décharge de fluides hors de l'appareil de déshydratation sont fournis,
caractérisé en ce que
ledit moyen comprend des trous d'élimination d'eau/dégazéification (8a) qui sont formés de façon dispersée à travers ladite plaque d'électrode, et
dont chacun est rempli avec un matériau de filtrage (11).

3. Appareil de déshydratation du type par électro-endosmose selon la revendication 2, caractérisé en ce que
ledit matériau de filtrage (11) dans chacun desdits trous comprend un support (11a).

4. Appareil de déshydratation du type par électro-endosmose selon la revendication 2, caractérisé en ce que
le moyen pour permettre la décharge des gaz et de l'eau est un filet (10) du côté de ladite plaque d'électrode non en regard de la boue (7).

5. Appareil de déshydratation du type par électro-endosmose dans lequel une source de tension continue (5) est connectée à une anode (8) formée sur un tambour tournant (1) et une cathode (2) en regard l'une de l'autre à travers un espace formant un passage de boue (7), adapté pour que lors de l'utilisation, l'eau contenue dans la boue (7) appliquée audit espace soit collectée du côté de ladite cathode (2) par électro-endosmose et déchargée hors de l'appareil de déshydratation, de sorte qu'une plaque d'électrode d'au moins ladite anode (8) est en contact direct avec ladite boue (7) et un moyen sur l'anode (8) pour permettre la décharge des fluides hors de l'appareil de déshydratation sont fournis, caractérisé en ce que
ledit moyen comprend des matériaux de filtrage en forme de bande (12) qui sont disposés de façon dispersée sur la surface de ladite plaque d'électrode sur ladite anode (8) du côté de celle-ci en contact avec ladite boue (7) et qui sont fixées à ladite plaque d'électrode, de sorte que lesdits matériaux de filtrage en forme de bande (12) ont leurs extrémités d'un côté tirées à l'extérieur et ont des fonctions de tube de capillarité.
